# EUROPEAN PATENT SPECIFICATION

(11) **EP 1 460 302 B1**
(45) Date of publication and mention of the grant of the patent: **01.08.2007**
(21) Application number: 04006120.2
(22) Date of filing: 15.03.2004
(51) Int. Cl.: F16F 15/123, F16D 13/64, F16B 19/06

(54) **Torsional damper apparatus**
Drehschwingungsdämpfer
Amortisseur d'oscillations de torsion

(30) Priority: 18.03.2003 JP 2003073207
(43) Date of publication of application: 22.09.2004
(73) Proprietor: AISIN SEIKI KABUSHIKI KAISHA, Kariya-shi, Aichi-ken 448-8650 (JP)
(72) Inventor: Takashi, Yukihisa, Chita-gun Aichi-ken (JP); Fukaya, Nobuki, Takahama-shi Aichi-ken (JP); Kitada, Koji, Chiryu-shi Aichi-ken (JP)
(74) Representative: Kramer - Barske - Schmidtchen

(56) References cited:
- EP-A- 0 437 125
- DE-A- 2 209 493
- US-A- 5 839 182
- PATENT ABSTRACTS OF JAPAN vol. 1999, no. 12, 29 October 1999 (1999-10-29) & JP 11 182576 A (EXEDY CORP), 6 July 1999 (1999-07-06)

## Description

### FIELD OF THE INVENTION

The present invention generally relates to a torsional damper apparatus used for a clutch disk for vehicle and the like. More particularly, the present invention pertains to a torsional damper apparatus which can be assembled with a less process.

### BACKGROUND OF THE INVENTION

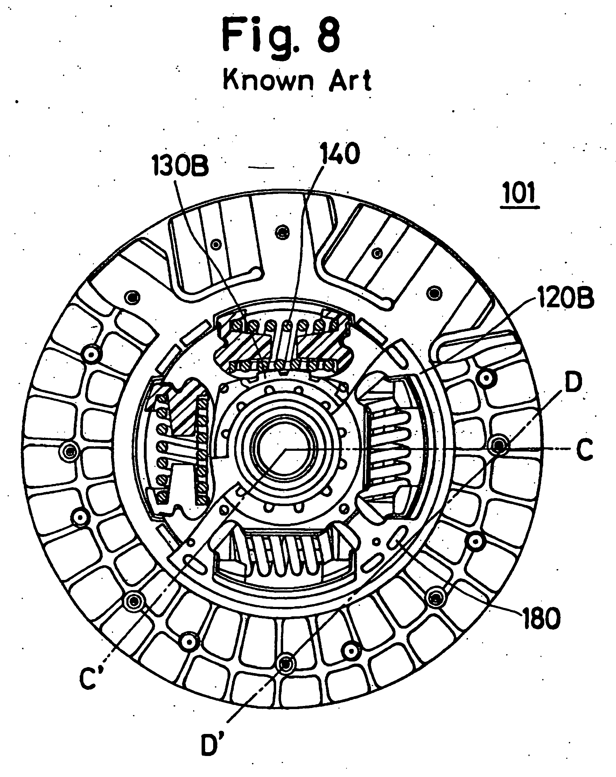

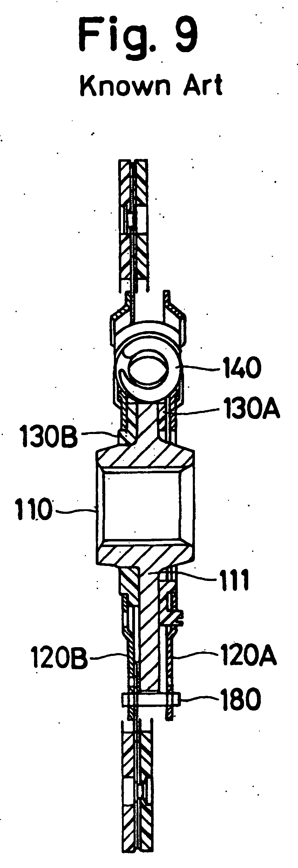

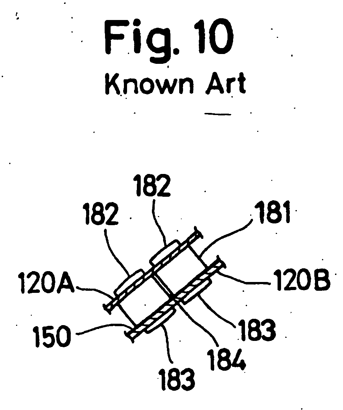

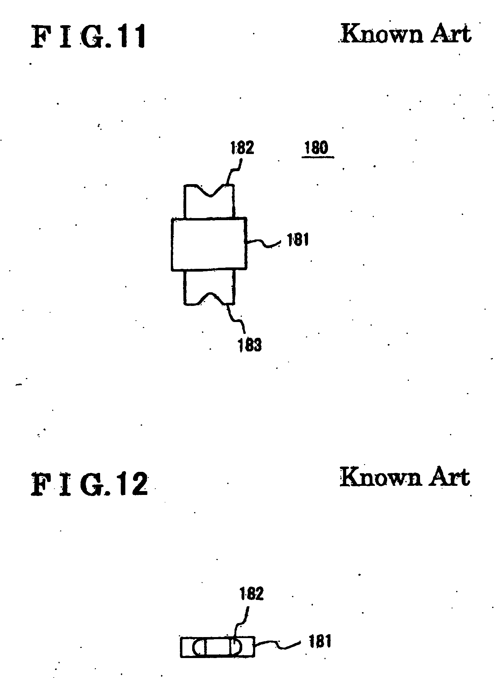

A clutch disk is generally equipped with a damper device in a rotating direction. Such a damper device is disclosed in Japanese Patent Laid. Open Publication No. H11(1999)-182576 which forms the preamble of claim 1. As shown in Figs. 8 and 9, a damper device 101 includes a clutch hub 110 and side plates 120A and 120B between which a damper element such as a coil spring 140, thrust members 130A and 130B is disposed. The damper element is held between a pair of side plates 120A and 120B. The pair of side plates 120A and 120B are connected to each other via rivet pins 180. As shown in Figs. 10, 11 and 12, each rivet pin 180 having a flat shape includes a body portion 181 arranged between the pair of side plates 120A and 120B, rivet portions 182 and 183 for riveting the side plates 120A and 120B each other. According to the disclosed clutch disk, a great number of rivet pins 180 are used for connecting the side plates 120A and 120B to each other to thereby assure the strength. The rivet pins 180 are provided at an outer circumferential side of the side plates 120A and 120B in order to improve the torsional damping performance of the clutch disk.

With the large number of the rivet pins 180, the assembly process is increased and then the cost is increased. However, the number of the rivet pins 180 cannot be decreased for achieving the strength. Further, the rivet pin 180 which of flat shape is unstable and easy to fall down when being inserted into a hole formed on the side plate as compared to a rivet pin which of round shape, thereby requiring a wasting time for assembly.

Furthermore, it is known from DE 22 09 493 A to reduce the assembly time for riveting two rivets when these are formed as one rivet body with two rivet pins.

Thugs, a need exists for a torsional damper apparatus that can reduce the assembly process and the cost.

Further, it would also be desirable to provide such a torsional damper apparatus which requires no extra assembly process by using flat rivet pins.

### SUMMARY OF THE INVENTION

This object is solved by a torsional damper apparatus comprising the features of claim 1. Preferred embodiments are defined by the dependent claims.

According to an aspect of the present invention, a torsional damper apparatus includes a clutch hub having a hub portion and a flange portion extending in a radially outward direction from the hub portion, a first side plate and a second side plate disposed on opposite sides of the clutch hub in an axial direction, a first thrust member retained between the first side plate and the clutch hub, and a second thrust member retained between the second side plate and the clutch hub. The torsional damper apparatus further includes an annular cushion spring whose radially inner portion is connected to a radially outer portion of the second side plate, and a plurality of rivet pins for connecting the first side plate and the second side plate by riveting. At least two rivet pins arranged next to each other are integrally formed.

The rivet pins each include a body portion provided between the first side plate and the second side plate, a plurality of flat-type first rivet portions formed at one end of the body portion, and a plurality of flat-type second rivet portions formed at the other end of the body portion.

According to the present invention mentioned above, the assembly process may be widely reduced without losing the strength of riveting. Further, no extra assembly process is required by using the flat-type rivet pins.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements.
Fig. 1 is a front view of a torsional damper apparatus according to a first embodiment of the present invention;
Fig. 2 is a cross-sectional view taken along a line A-A' of Fig. 1;
Fig. 3 is a partial cross-sectional view taken along a line B-B' of Fig. 1;
Fig. 4 is a front view of a rivet pin of the torsional damper apparatus according to the first embodiment of the present invention;
Fig. 5 is a side view of the rivet pin of the torsional damper apparatus according to the first embodiment of the present invention;
Fig. 6 is a front view of a rivet pin of a torsional damper apparatus according to a second embodiment of the present invention;
Fig. 7 is a side view of the rivet pin of the torsional damper apparatus according to the second embodiment of the present invention;
Fig. 8 is a front view of a torsional damper apparatus according to a known art;
Fig. 9 is a cross-sectional view taken along a line C-C' of Fig. 8;
Fig. 10 is a partial cross-sectional view taken along a line D-D' of Fig. 9;
Fig. 11 is a front view of a rivet pin of the torsional damper apparatus according to the known work; and
Fig. 12 is a side view of the rivet pin of the torsional damper apparatus according to the known work.

### DETAILED DESCRIPTION OF THE INVENTION

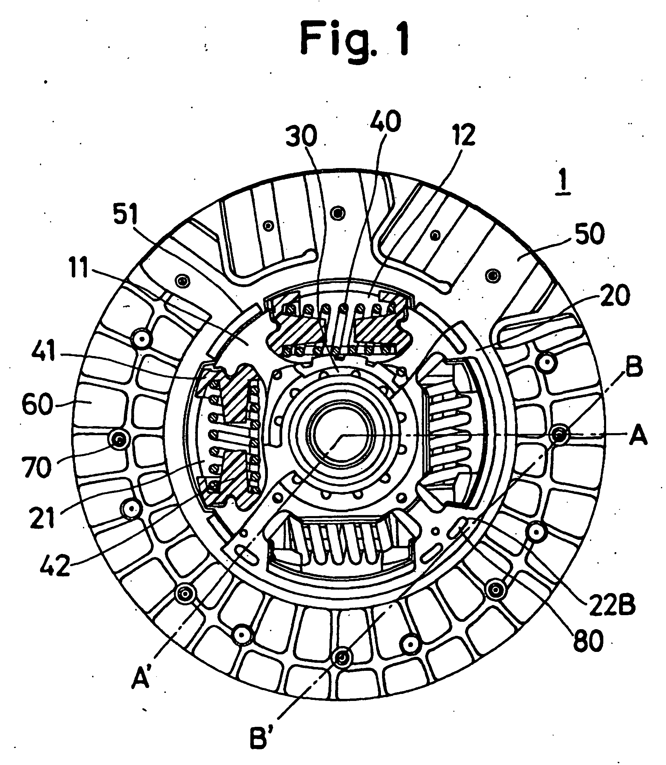

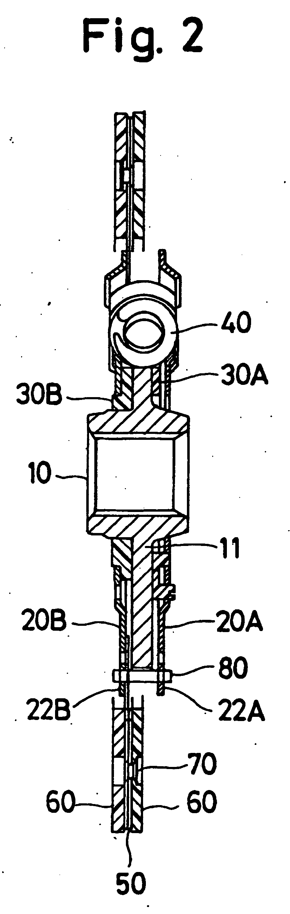

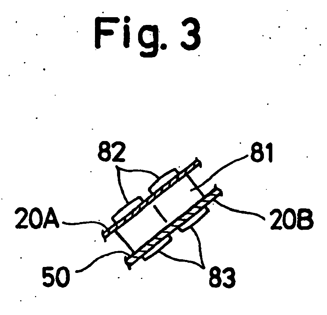

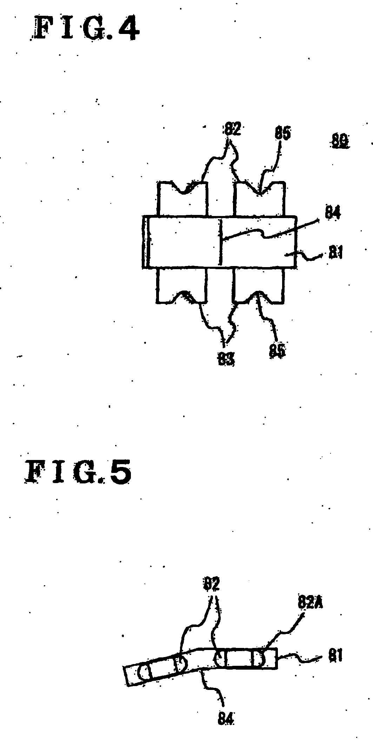

A first embodiment of the present invention is explained referring to attached drawings. Fig. 1 is a front view showing a structure of a torsional damper apparatus 1 according to the first embodiment. Fig. 2 is a cross-sectional view taken along a line A-A' of Fig. 1. Fig. 3 is a partial cross-sectional view taken along a line B-B' of Fig. 1. Fig. 4 is a front view showing a structure of a rivet pin of the torsional damper apparatus 1. Fig. 5 is a top view of the rivet pin.

The torsional damper apparatus 1 is employed in a clutch disk and includes a clutch hub 10, a side plate 20, a thrust member 30, a coil spring 40, a cushion spring 50, a friction element 60, a rivet 70 and a rivet pin 80.

The clutch hub 10 includes a hub portion and a flange 11 extending in a radially outward direction from the hub portion as shown in Figs. 1 and 2. In Fig. 2, the flange 11 is formed as a unit with the hub portion of the clutch hub 10. However, the flange 11 and the hub portion may be separately formed so that a small spring can be disposed therebetween. Then, a small torsional vibration can be absorbed between the flange 11 and the hub portion. The clutch hub 10 also includes a notch 12 that opens in the radially outward direction of the flange 11. The notch 12 is constituted in such a manner that an outer circumferential side of a spring seat 41 (See Fig. 1) is positioned radially outward relative to an outer circumferential side of the flange 11.

The side plate 20 is coaxially provided and relatively rotatable with the clutch hub 10. As shown in Fig. 2, the side plate 20 includes a first side plate 20A and a second side plate 20B disposed on opposite sides of the clutch hub 10 in an axial direction. The first side plate 20A and the second side plate 20B include window holes 21 for connecting the outer circumferential side of the coil spring 40. In addition, through-holes 22A and 22B are formed on the first side plate 20A and the second side plate 20B respectively so as to be used for connecting the first side plate 20A and the second side plate 20B to each other at each circumferential portion thereof via the rivet pins 80.

The washer-type thrust member 30 is disposed between respective contact faces of the clutch hub 10 and the side plate 20. As shown in Fig. 2, the thrust member 30 includes a first thrust member 30A disposed between the respective contact faces of the clutch hub 10 and the first side plate 20A and a second thrust member 30B disposed between the respective contact faces of the clutch hub 10 and the second side plate 20B.

The coil spring 40 is disposed in the notch 12 and the window holes 21, facing to each other, formed on the clutch hub 10 and the side plates 20A and 20B respectively. Four coil springs 40 (or possibly two) are employed according to the present embodiment as shown in Fig. 1. Each coil spring 40 is received within the notch 12 and the window hole 21 while being supported by a pair of spring seats 41 and 42.

A radially inward portion of the cushion spring 50 is connected to a radially outward portion of the second side plate 20B as shown in Fig. 2. The cushion spring 50 and the second side plate 20B are connected to each other via the rivet pins 80. The cushion spring 50 includes a through-hole 51 for facing to a body portion 81 of the rivet pin 80 in a region corresponding to, i.e. overlapping, the through-hole 22B formed on the second side plate 20B so that the rivet pin 80 is stably positioned. A pair of friction elements 60 each having an annular shape are fixed to opposite sides of the cushion spring 50 in the axial direction via the rivets 70.

The rivet pin 80 connects the first side plate 20A and the second side plate 20B and includes the body portion 81 placed between the first side plate 20A and the second side plate 20B, a plurality of flat-type first rivet portions 82 at one end of the body portion 81, and a plurality of flat-type second rivet portions 83, whose number is equal to that of the first rivet portions 82, at the other end of the body portion 81. The body portion 81 includes a bent portion 84 on a side wall face positioned corresponding to the through-hole 22A formed on the first side plate 20A and the through-hole 22B formed on the second side plate 20B. Alternatively, the body portion 81 may include a curved face portion on the side wall face positioned corresponding to the through-holes 22A and 22B. The first rivet portion 82 is riveted being inserted into the through-hole 22A of the first side plate 20A while the second rivet portion 83 is riveted being inserted into the through-hole 22B of the second side plate 20B. Corners of side walls of the first rivet portion 82 and the second rivet portion 83 are each in a round shape (such as a round corner 82A in Fig. 5) so that the stress applied to the through-hole 22A of the first side plate 20A and the through-hole 22B of the second side plate 20B can be reduced. The first rivet portion 82 and the second rivet portion 83 each include a V-shaped or U-shaped concave portion 85 in a region including a center portion of one end face provided perpendicular to a flat face of the side wall of each first rivet portion 82 or the second rivet portion 83, i.e. the one end face provided opposite to the other end face of the first rivet portion 82 or the second rivet portion 83 fitted to the body portion 81, so that the stress after riveting can be reduced. The rivet pin 80 is desirably formed by being stamped out with a press for achieving the reduced cost. A cross-section of the body portion 81 perpendicular to the side wall face thereof and in a direction in which the first rivet portion 82 is extending has a substantially rectangular shape.

The pair of friction elements 60 are retained between an engine flywheel and a pressure plate (not shown). In addition, the clutch hub 10 is provided with a spline portion at an inner peripheral surface where an input shaft of a transmission (not shown) having a spline portion is engaged. The torsional damper apparatus 1 according to the present embodiment is employed in the clutch disk in an aforementioned manner.

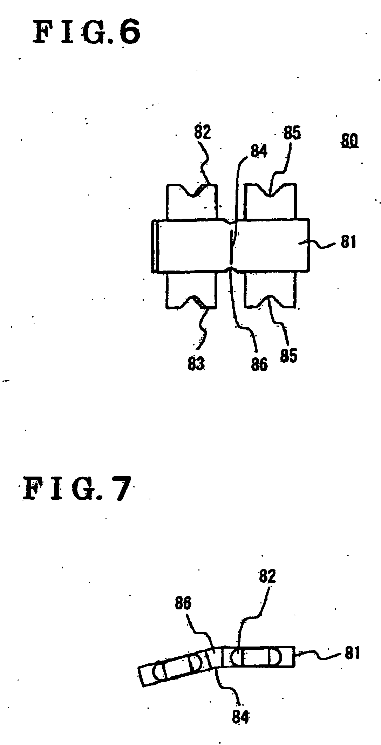

The torsional damper apparatus 1 according to a second embodiment of the present invention is explained in the following. Fig. 6 is a front view showing the structure of the rivet pin 8. Fig. 7 is a top view of the rivet pin 8.

According to the second embodiment, the body portion 81 of the rivet pin 80 includes a notch portion 86 in a region including a portion in which one end face of the body portion 81 on the first rivet portion 82 side and the other end face of the body portion 81 on the second rivet portion 83 side each cross the bent portion 84. Then, each part may be smoothly assembled when riveted. Further, creases formed at an inner side of the bent portion 84 when the flat rivet pin 80 is bent may prevent a portion of the end faces of the body portion 81 from being raised.

The principles, preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive.

## Claims

1. A torsional damper apparatus (1) comprising:
a clutch hub (10) having a hub portion and a flange portion (11) extending in a radially outward direction from the hub portion;
a first side plate (20A) and a second side plate (20B) disposed on opposite sides of the clutch hub(10) in an axial direction;
a first thrust member (30A) retained between the first side plate (20A) and the clutch hub (10);
a second thrust member (30B) retained between the second side plate (20B) and the clutch hub (10);
an annular cushion spring (50) whose radially inner portion is connected to a radially outer portion of the second side plate (20B); and
a plurality of rivet pins (80) are disposed for connecting the first side plate (20A) and the second side plate (20B);
**characterized in that**
at least two rivet pins (80) positioned next to each other are integrally formed,
wherein each rivet pin(80) includes a body portion (81) provided between the first side plate (20A) and the second side plate (20B),
a plurality of flat-type first rivet portions (82) formed at one end of the body portion (81), and a plurality of flat type second rivet portions (83) formed at the other end of the body portion (81);

2. A torsional damper apparatus according to claim 1, wherein the body portion of the rivet pin includes a bent portion (84) on a side wall face positioned corresponding to the first through-holes formed on the first side plate and the second through-holes formed on the second side plate.

3. A torsional damper apparatus according to claim 1, wherein the body portion of the rivet pin includes a curved portion on a side wall face positioned corresponding to the first through-holes formed on the first side plate and the second through-holes formed on the second side plate.

4. A torsional damper apparatus according to claim 2, wherein the body portion of the rivet pin includes a notch portion (86) on each end face of the bent portion on the first rivet portion side and the second rivet portion side.

5. A torsional damper apparatus according to claim 3, wherein the body portion of the rivet pin includes a notch portion (86) on each end face of the curved portion on the first rivet portion side and the second rivet portion side.

6. A torsional damper apparatus according to any one of claims 1 through 5, wherein the first rivet portion and the second rivet portion each include a round corner on each side wall.

7. A torsional damper apparatus according to claim 6, wherein the first rivet portion and the second rivet portion each include a V-shaped or U-shaped concave portion (85) in a region including a center portion of each end face of the first rivet portion and the second rivet portion positioned perpendicular to each flat face of the side wall of the first rivet portion and the second rivet portion.

8. A torsional damper apparatus according to claim 7, wherein the body portion of the rivet pin includes a substantially rectangular shaped section being perpendicular to the side wall face of the body portion and in a direction in which the first rivet portion is extending.

9. A torsional damper apparatus according to any one of claims 1 to 8, wherein the rivet pin is formed by being stamped out with a press.

10. A torsional damper apparatus according to any one of claims 1 to 8 wherein the cushion spring includes a third through-hole (51) in a region including a portion corresponding to the second through-hole formed on the second side plate for facing to the body portion of the rivet pin.

## Patentansprüche

1. Drehschwingungsdämpfer (1), enthaltend:
eine Kupplungsnabe (10), die einen Nabenbereich und einen Flanschbereich (11) aufweist, der sich in einer Richtung radial nach außen von dem Nabenbereich aus erstreckt;
eine erste Seitenplatte (20A) und eine zweite Seitenplatte (20B), die auf gegenüberliegenden Seiten der Kupplungsnabe (10) in einer axialen Richtung angeordnet sind;
ein erstes Schubelement (30A), das zwischen der ersten Seitenplatte (20A) und der Kupplungsnabe (10) gehalten wird;
ein zweites Schubelement (30B), das zwischen der zweiten Seitenplatte (20B) und der Kupplungsnabe (10) gehalten wird;
eine ringförmige Dämpfungsfeder (50), deren radial innerer Bereich mit einem radial äußeren Bereich der zweiten Seitenplatte (20B) verbunden ist; und
eine Mehrzahl von Nietstiften (80), die zum Verbinden der ersten Seitenplatte (20A) und der zweiten Seitenplatte (20B) angeordnet sind;
**dadurch gekennzeichnet, dass**
zumindest zwei Nietstifte (80), die nebeneinander positioniert sind, integral gebildet sind,
wobei jeder Nietstift (80) einen Körperbereich (81) enthält, der zwischen der ersten Seitenplatte (20A) und der zweiten Seitenplatte (20B) vorgesehen ist,
eine Mehrzahl von flachen ersten Nietbereichen (82A) an einem Ende des Körperbereichs (81) geformt sind und eine Mehrzahl von flachen zweiten Nietbereichen (83) am anderen Ende des Körperbereichs (81) geformt sind.

2. Drehschwingungsdämpfer nach Anspruch 1, wobei der Körperbereich des Nietstifts einen gebogenen Bereich (84) auf einer Seitenwandfläche enthält, der entsprechend den ersten Durchgangslöchern, die auf der ersten Seitenplatte geformt sind, und den zweiten Durchgangslöchern, die auf der zweiten Seitenplatte geformt sind, positioniert ist.

3. Drehschwingungsdämpfer nach Anspruch 1, wobei der Körperbereich des Nietstifts einen gekrümmten Bereich auf einer Seitenwandfläche enthält, der entsprechend den ersten Durchgangslöchern, die auf die erste Seitenplatte geformt sind und den zweiten Durchgangslöchern, die auf der zweiten Seitenplatte geformt sind, positioniert ist.

4. Drehschwingungsdämpfer nach Anspruch 2, wobei der Körperbereich des Nietstifts einen Kerbenbereich (86) auf jeder Endfläche des gebogenen Bereichs der Seite des ersten Nietbereichs und der Seite des zweiten Nietbereichs enthält.

5. Drehschwingungsdämpfer nach Anspruch 3, wobei der Körperbereich des Nietstifts einen Kerbenbereich (86) auf jeder Endfläche des gekrümmten Bereichs auf der Seite des ersten Nietbereichs und der Seite des zweiten Nietbereichs enthält.

6. Drehschwingungsdämpfer nach einem der Ansprüche 1 bis 5, wobei der erste Nietbereich und der zweite Nietbereich jeweils eine abgerundete Ecke auf jeder Seitenwand enthalten.

7. Drehschwingungsdämpfer nach Anspruch 6, wobei der erste Nietbereich und der zweite Nietbereich jeweils einen V-förmigen oder U-förmigen konkaven Bereich (85) in einem Gebiet enthält, das einen Zentrumsbereich von jeder Endfläche des ersten Nietbereichs und des zweiten Nietbereichs enthält, der senkrecht zu jeder flachen Fläche der Seitenwand des ersten Nietbereichs und des zweiten Nietbereichs positioniert ist.

8. Drehschwingungsdämpfer nach Anspruch 7, wobei der Körperbereich des Nietstifts einen im Wesentlichen rechtecksförmigen Abschnitt enthält, der senkrecht zu der Seitenwandfläche des Körperbereichs ist und in einer Richtung, in der sich der erste Nietbereich erstreckt.

9. Drehschwingungsdämpfer nach einem der Ansprüche 1 bis 8, wobei der Nietstift gebildet ist, indem er mit einer Presse ausgestanzt wird.

10. Drehschwingungsdämpfer nach einem der Ansprüche 1 bis 8, wobei die Dämpfungsfeder ein drittes Durchgangsloch (51) in einem Gebiet enthält, das einen Bereich enthält, der dem zweiten Durchgangsloch entspricht, das auf der zweiten Seitenplatte geformt ist, zum Gerichtetsein auf den Körperbereich des Nietstifts.

## Revendications

1. Appareil d'amortissement en torsion (1) comprenant :
un moyeu d'embrayage (10) ayant une partie de moyeu et une partie de rebord (11) s'étendant dans une direction radialement vers l'extérieur depuis la partie de moyeu ;
une première plaque latérale (20A) et une seconde plaque latérale (20B) disposées sur des côtés opposés du moyeu d'embrayage (10) dans une direction axiale ;
un premier élément de poussée (30A) retenu entre la première plaque latérale (20A) et le moyeu d'embrayage (10) ;
un second élément de poussée (30B) retenu entre la seconde plaque latérale (20B) et le moyeu d'embrayage (10) ;
un ressort d'amortissement (50) annulaire dont la partie radialement intérieure est connectée à une partie radialement extérieure de la seconde plaque latérale (20B) ; et
une pluralité de goupilles rivet (80) sont disposées pour connecter la première plaque latérale (20A) et la seconde plaque latérale 20B ;
**caractérisé en ce que**
au moins deux goupilles rivet (80) positionnées proches l'une de l'autre sont formées intégralement, dans lequel chaque goupille rivet (80) comprend une partie de corps (81) placée entre la première plaque latérale (20A) et la seconde plaque latérale (20B),
une pluralité de premières parties de rivet (82) de type plat formées à une extrémité de la partie de corps (81), et une pluralité de secondes parties de rivet (83) de type plat formées à l'autre extrémité de la partie de corps (81).

2. Appareil d'amortissement en torsion selon la revendication 1, dans lequel la partie de corps de la goupille rivet comprend une partie courbée (84) sur une face de paroi latérale positionnée en correspondance aux premiers trous de passages formés sur la première plaque latérale et aux seconds trous de passages formés sur la seconde plaque latérale.

3. Appareil d'amortissement en torsion selon la revendication 1, dans lequel la partie de corps de la goupille rivet comprend une partie courbée sur une face de paroi latérale positionnée en correspondance aux premiers trous de passages formés sur la première plaque latérale et aux seconds trous de passages formés sur la seconde plaque latérale.

4. Appareil d'amortissement en torsion selon la revendication 2, dans lequel la partie de corps de la goupille rivet comprend une partie de fente (86) sur chaque face d'extrémité de la partie courbée sur le côté de première partie de rivet et le côté de seconde partie de rivet.

5. Appareil d'amortissement en torsion selon la revendication 3, dans lequel la partie de corps de la goupille rivet comprend une partie de fente (86) sur chaque face d'extrémité de la partie courbée sur le côté de première partie de rivet et le côté de seconde partie de rivet.

6. Appareil d'amortissement en torsion selon l'une quelconque des revendications 1 à 5, dans lequel la première partie de rivet et la seconde partie de rivet comprennent chacun un coin arrondi sur chaque paroi latérale.

7. Appareil d'amortissement en torsion selon la revendication 6, dans lequel la première partie de rivet et la seconde partie de rivet comprennent chacun une partie concave (85) en forme de V ou en forme de U dans une région comprenant une partie centrale de chaque face d'extrémité de la première partie de rivet et de la seconde partie de rivet positionnées perpendiculaires à chaque face plate de la paroi latérale de la première partie de rivet et de la seconde partie de rivet.

8. Appareil d'amortissement en torsion selon la revendication 7, dans lequel la partie de corps de la goupille rivet comprend une section transversale sensiblement de forme rectangulaire perpendiculaire à la face de paroi latérale de la partie de corps et dans une direction dans laquelle la première partie de rivet s'étend.

9. Appareil d'amortissement en torsion selon l'une quelconque des revendications 1 à 8, dans lequel la goupille rivet est formée en étant estampée avec une presse.

10. Appareil d'amortissement en torsion selon l'une quelconque des revendications 1 à 8, dans lequel le ressort d'amortissement comprend un troisième trou de passage (51) dans une région comprenant une partie correspondant au second trou de passage formé sur la seconde plaque latérale pour faire face à la partie de corps de la goupille rivet.
